# EUROPÄISCHE PATENTSCHRIFT

(11) **EP 3 225 133 B1**
(45) Veröffentlichungstag und Bekanntmachung des Hinweises auf die Patenterteilung: **26.10.2022**
(21) Anmeldenummer: 17000410.5
(22) Anmeldetag: 14.03.2017
(51) Int. Cl.: A47C 1/03

(54) **HÖHENVERSTELLBARE ARMLEHNE**
HEIGHT-ADJUSTABLE ARMREST
ACCOUDOIR RÉGLABLE EN HAUTEUR

(30) Priorität: 30.03.2016 DE 102016105751
(43) Veröffentlichungstag der Anmeldung: 04.10.2017
(73) Patentinhaber: BOCK 1 GmbH & Co. KG, 92353 Postbauer-Heng (DE)
(72) Erfinder: Bock, Hermann, 90602 Pyrbaum (DE)
(74) Vertreter: Schneider, Andreas

(56) Entgegenhaltungen:
- WO-A1-2004/073456
- DE-U1- 20 106 527
- US-A- 4 311 338
- US-A- 4 496 190

## Beschreibung

Die Erfindung betrifft eine höhenverstellbare Armlehne für einen Stuhl, insbesondere einen Bürcstuhl.

Armlehnen sind nach dem Stand der Technik in der Regel so aufgebaut, daß der die Armauflage tragende Armlehnenhalter an einem Teil des Stuhlgestells, meist an der Konsole oder dem Sitzträger, befestigt ist. Dabei ist diese Befestigung häufig so gewählt, daß keine weitere Bewegung des Armlehnenhalters möglich ist. Bei höhenverstellbaren Armlehnen kann die Armauflage gegenüber dem Armlehnenhalter in der Höhe verstellt werden, zu welchem Zweck in den meisten Fällen eine Rastvorrichtung vorgesehen ist. Zum Zweck der Höhenfixierung greift dann ein Rastelement in eine dafür vorgesehen Rastausnehmung ein. Soll die Höhe der Armlehne hingegen verstellt werden, wird das Rastelement außer Eingriff mit der Rastausnehmung gebracht. Die Höhenverstellung erfolgt dabei zumeist linear in der Vertikalen entlang der Längsrichtung des Armlehnenhalters.

Neben diesen Armlehnen mit vergleichsweise einfachen Höhenverstellungen, die in der Regel durch Teleskopierung ineinander geführter Bauelemente verwirklicht werden, sind jedoch auch Armlehnen bekannt, bei denen die Armauflage mit dem Stuhlgestell über einen verschwenkbaren Armlehnenhalter verbunden wird und die Höhenverstellung der Armlehne durch das Verschwenken des Armlehnenhalters bewirkt wird. Soll die Lage der Armauflage bei derartigen verschwenkbaren Armlehnenhaltern unabhängig von der eingestellten Höhe unverändert bleiben, z. B. genau waagerecht, dann sind diese Armlehnenhalter häufig als sogenannte Parallelogrammführungen ausgebildet, bei denen mit Hilfe von vier Gelenken eine bewegliche, parallelentreue Lagerung der Armauflage unabhängig von der Höhenverstellung möglich ist.

Bei höhenverstellbaren Armlehnen mit Parallelogrammführungen sind die Arretiereinrichtungen zum Fixieren des Armlehnenhalters in einer definierten Höhenstellung bisher stets am unteren, höhenunveränderlichen Ende des Armlehnenhalters realisiert, nämlich in der Konsole bzw. dem Sitzträger usw., da dort der für die Arretiereinrichtung notwendige Bauplatz in einem ausreichenden Umfang zur Verfügung steht.

Nachteilig bei einer solchen Lösung ist es, daß immer dann, wenn die Auslösevorrichtung für die Höhenverstellung, beispielsweise ein von dem Stuhlbenutzer betätigbarer Druckknopf oder dergleichen, in der Armauflage selbst oder in unmittelbarer Nähe zur Armauflage vorgesehen sein soll, was in der Regel wünschenswert ist, eine Wirkverbindung zwischen der Auslösevorrichtung am oberen, höhenveränderlichen Ende des Armlehnenhalters einerseits und der Arretiereinrichtung am unteren, höhenunveränderlichen Ende des Armlehnenhalters andererseits vorhanden sein muß, beispielsweise in Gestalt eines Gestänges, eines Zugmittels, beispielsweise eines Bowdenzuges, oder dergleichen. Aus diesem Grund ist die Höhenverstellung bei solchen Systemen vergleichsweise aufwendig. Gleichzeitig ergeben sich aufgrund der notwendigen Wirkverbindung entlang des Armlehnenhalters Vorgaben und Einschränkungen hinsichtlich der konstruktiven Ausgestaltung des Armlehnenhalters selbst. So kann der Armlehnenhalter keine beliebigen Formen, beispielsweise extrem geschwungene Formen aufweisen, ohne den notwendigen konstruktiven Aufwand für die Verwirklichung der Wirkverbindung nochmals deutlich zu erhöhen. Typischerweise sind in solchen Fällen die Armlehnenhalter entweder als mit Hohlräumen versehene Bauteile ausgeführt, wobei das Gestänge oder das Zugmittel in dem jeweiligen Hohlraum verbaut ist, oder aber es sind die Armlehnenhalter ummantelnde Gehäuse vorgesehen, die den Armlehnenhaltern ein vergleichsweise voluminöses Aussehen verleihen.

In WO 2004/073456 A1 ist eine höhenverstellbare Armlehne mit einer Parallelogrammführung beschrieben, bei der die Höhenverstellung am oberen, höhenveränderlichen Ende des Armlehnenhalters realisiert ist. Jedoch ist für diese Höhenverstellung ein sehr großer Bauraum erforderlich. Zur Aufnahme des Mechanismus zur Höhenverstellung ist unmittelbar unterhalb der Armauflage ein großvolumiges Gehäuse vorgesehen. Dies verleiht der Armlehne ein voluminöses Aussehen.

In DE 201 06 527 U1 ist eine höhenverstellbare Armlehne beschrieben, bei der die Arme des Armlehnenhalters jeweils mit einer Rastverzahnung versehen sind, die mit einer Rastnase eines Rastbügels zusammenwirken, wobei die entstehende Rastverbindung durch Druck auf den Rastbügel gelöst und die Höhe der Armlehne durch Anheben oder Absenken des Armlehnenhalters verändert werden kann.

Eine Aufgabe der vorliegenden Erfindung ist es, eine höhenverstellbare Armlehne bereitzustellen, deren Höhenverstellung in einem besonders kleinen Bauraum verwirklicht werden kann. Diese Aufgabe wird durch eine Armlehne nach Anspruch 1 gelöst. Vorteilhafte Ausführungen der Erfindung sind in den Unteransprüchen angegeben.

Die höhenverstellbare Armlehne umfaßt eine Armauflage, die von einem Armlehnenhalter gehalten wird, wobei der Armlehnenhalter verschwenkbar ist, durch welches Verschwenken eine Höhenverstellung der Armlehne bewirkt wird. Die Armlehne umfaßt weiterhin eine Arretiereinrichtung zum Fixieren des Armlehnenhalters in einer Höhenstellung, wobei die Arretiereinrichtung am oberen, höhenveränderlichen Ende des Armlehnenhalters angeordnet ist und ein linear bewegliches Rastelement aufweist, das mit dem Armlehnenhalter über ein Lenkerelement derart verbunden ist, daß jede Schwenkbewegung des Armlehnenhalters eine Linearbewegung des Rastelements induziert, wobei das Lenkerelement unmittelbar an dem Rastelement angreift und dieses in einer Linearführung hin und her führt, wobei die Linearbewegung des Rastelements parallel zu der Längsrichtung der Armlauflage verläuft. Die erfindungsgemäße Armlehne ist nun dadurch gekennzeichnet, daß der Armlehnenhalter wenigstens einen Tragarm umfaßt, welcher einerseits unter Ausbildung einer ersten Schwenkachse an einem Teil des Stuhlgestells und andererseits unter Ausbildung einer zweiten Schwenkachse an der Armauflage angelenkt ist, wobei dieser Tragarm an einem von den Schwenkachsen beabstandeten Drehpunkt gelenkig mit dem Lenkerelement verbunden ist derart, daß ein Verschwenken des Tragarms in eine hin- und hergehende Bewegung des Lenkerelements umgesetzt wird.

Eine Kernidee der Erfindung ist es, die Bewegung eines für die Fixierung des Armlehnenhalters in einer definierten Höhenstellung ausschlaggebenden Bauteils der Arretiereinrichtung, nämlich die Bewegung eines linear beweglichen Rastelements, mit der rotatorischen Bewegung zur Höhenverstellung selbst, nämlich der Schwenkbewegung des Armlehnenhalters, zu verknüpfen, nämlich diese beiden Bewegungen aneinander zu koppeln. Vorzugsweise sind dabei das Rastelement und der Armlehnenhalter derart miteinander verbunden, daß ein Feststellen des Rastelements ein Fixieren des Armlehnenhalters in einer bestimmten Höhenstellung bewirkt, da durch ein Verhindern der Linearbewegung des Rastelements auch die Schwenkbewegung des Armlehnenhalters verhindert wird. Die Verbindung der beiden Komponenten erfolgt erfindungsgemäß durch eine unmittelbare, direkte Verbindung in Form einer Anlenkung mit einem vergleichsweise kurzen Lenkerelement, welches das Rastelement auf geeignete Weise mit dem oberen, höhenveränderlichen Ende des Armlehnenhalters verbindet.

Mit der vorliegenden Erfindung wird eine höhenverstellbare Armlehne bereitgestellt, deren Höhenverstellung in einem besonders kleinen Bauraum verwirklicht werden kann. Aus diesem Grund kann die Arretiereinrichtung in unmittelbarer Nähe zu der Auslösevorrichtung in der Armauflage oder in unmittelbarer Nähe zu der Armauflage, jedenfalls aber an dem oberen, höhenveränderlichen Ende des Armlehnenhalters, angeordnet werden. Es entfällt daher die Notwendigkeit einer Wirkverbindung zwischen dem oberen und dem unteren Ende des Armlehnenhalters. Sämtliche damit verbundenen Vorgaben und Einschränkungen hinsichtlich der konstruktiven Ausgestaltung des Armlehnenhalters entfallen ebenso. Der Armlehnenhalter kann völlig frei gestaltet werden und beliebige Formen aufweisen, beispielsweise auch extrem geschwungene Formen. Durch den Wegfall der Hohlräume kann der Armlehnenhalter mit Bauteilen verwirklicht werden, die Vollquerschnitte aufweisen. Damit kann der Armlehnenhalter nicht nur besonders filigran sondern auch mit besonders hoher Festigkeit konstruiert werden. Besonders vorteilhaft läßt sich daher die erfindungsgemäße Höhenverstellung mit Armlehnen kombinieren, deren Armlehnenhalter nach Art einer Parallelogrammführung zur stets waagerechten Lage der Armauflage ausgebildet ist.

Ein Ausführungsbeispiel der Erfindung wird nachfolgend anhand der Zeichnungen näher erläutert. Hierbei zeigen:
- Fig. 1: eine erfindungsgemäße Armlehne mit einer perspektivischen Ansicht von schräg unten (obere Stellung),
- Fig. 2: die Armlehne in einer perspektivischen Ansicht von schräg oben mit abgenommener Armauflage und Blick in das Gehäuseinnere (untere Stellung),
- Fig. 3: eine Schnittdarstellung der Armlehne entlang der Armauflagenlängsrichtung (untere Stellung, verriegelt),
- Fig. 4: eine Schnittdarstellung der Armlehne entlang der Armauflagenlängsrichtung (obere Stellung, verriegelt),
- Fig. 5: eine Schnittdarstellung der Armlehne entlang der Armauflagenlängsrichtung im Detail (untere Stellung, unverriegelt).

Sämtliche Figuren zeigen die Erfindung nicht maßstabsgerecht, dabei lediglich schematisch und nur mit ihren wesentlichen Bestandteilen. Gleiche Bezugszeichen entsprechen dabei Elementen gleicher oder vergleichbarer Funktion.

Die höhenverstellbare Armlehne 1 für einen Stuhl, insbesondere einen Bürostuhl, umfaßt eine Armauflage 2 mit einer im wesentlichen waagerecht angeordneten Oberfläche der Armauflagenpolsterung 3 und einen mit der Armauflage 2 verbundenen Armlehnenhalter 4. Dabei wird die Armauflage 1 von dem Armlehnenhalter 4 gehalten. Genauer gesagt ist der Armlehnenhalter 4 mit dem unterhalb der Armauflagenpolsterung 3 angeordneten Armauflagengehäuse 5 verbunden. Der Armlehnenhalter 4 ist mit einem Teil des Stuhlgestells verbindbar, hier in Form eines Armlehnenverbindungsstücks 6, welches seitlich an einem Sitzträger (nicht dargestellt) des Stuhls anbringbar ist.

Damit die waagerechte Lage der Armauflage 2 unabhängig von der eingestellten Höhe gleichbleibend ist und auch während der Höhenverstellung unverändert bleibt, ist der Armlehnenhalter 4 als Parallelogrammführung ausgebildet. Der Armlehnenhalter 4 umfaßt einen unteren Tragarm 7 und einen dazu im wesentlichen parallel angeordneten oberen Tragarm 8. Diese Tragarme 7, 8 sind unter Ausbildung von jeweils zwei Gelenken an dem Armlehnengehäuse 5 einerseits sowie an dem Armlehnenverbindungsstück 6 andererseits angelenkt. Der untere Tragarm 7 ist dabei unter Ausbildung einer unteren, ersten Schwenkachse 9 an dem Armlehnenverbindungsstück 6 sowie unter Ausbildung einer oberen, zweiten Schwenkachse 10 an dem Armlehnengehäuse 5 angelenkt. Der obere Tragarm 8 ist dabei unter Ausbildung einer unteren, dritten Schwenkachse 11 an dem Armlehnenverbindungsstück 6 sowie unter Ausbildung einer oberen, vierten Schwenkachse 12 an dem Armlehnengehäuse 5 angelenkt. Alle vier Schwenkachsen 9, 10, 11, 12 verlaufen dabei horizontal und quer zu der Stuhllängsrichtung 13.

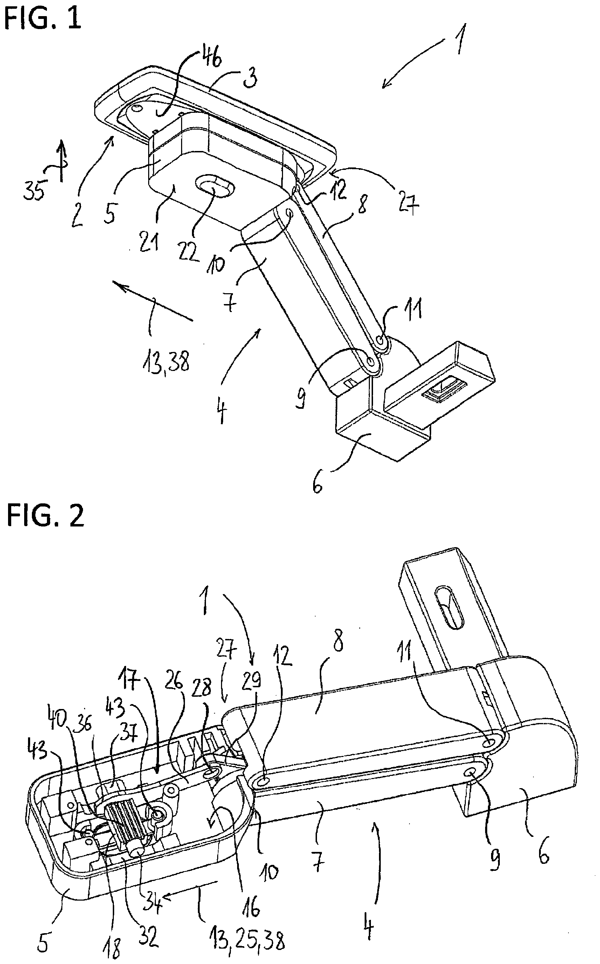

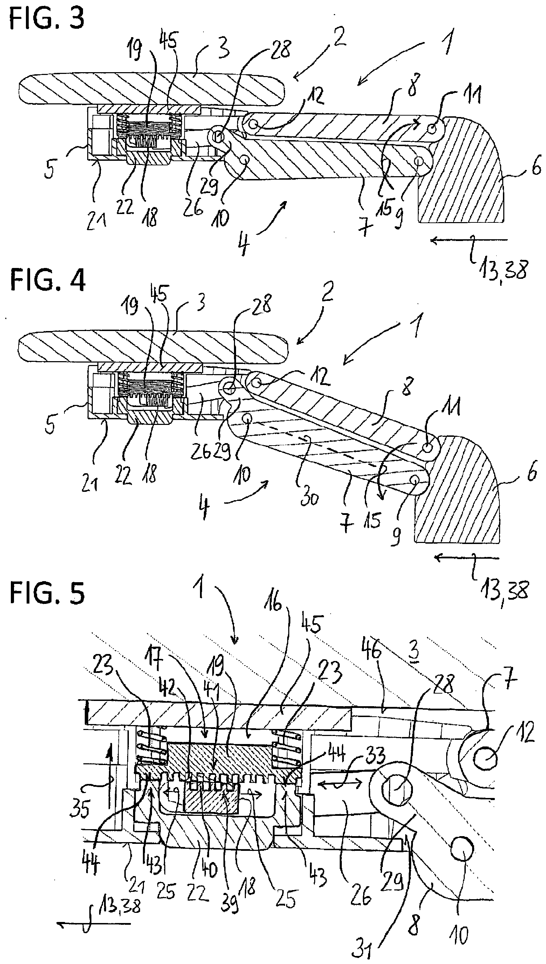

Durch ein Verschwenken des Armlehnenhalters 4, verwirklicht durch eine gleichlaufende Schwenkbewegung der beiden Tragarme 7, 8 um die beiden unteren Schwenkachsen 9, 11, wird eine Höhenverstellung der Armlehne 1 bewirkt. Je nach Schwenkrichtung (Pfeil 15) ändert sich die Position der Armauflage 2 von einer unteren Stellung (Fig. 2, 3) in eine obere Stellung (Fig. 1, 4) und zurück.

Im Inneren 16 des Armlehnengehäuses 5 ist eine Arretiereinrichtung 17 zum Fixieren des Armlehnenhalters 4 und damit der gesamten Armlehne 1 in einer definierten Höhenstellung untergebracht. Die Arretiereinrichtung 17 umfaßt im wesentlichen ein linear bewegliches, blockförmiges Rastelement 18 sowie ein quer dazu bewegliches, mit dem Rastelement 18 zusammenwirkendes, plattenförmiges Verriegelungselement 19, welches mit Hilfe eines an der Unterseite 21 des Armlehnengehäuses 5 angebrachten Tasters 22 gegen die Federkraft einer Anzahl von Federelemente 23 aus einer verriegelten, die Höheneinstellung fixierenden Ruhestellung (Fig. 3, 4) in eine Verstellstellung (Fig. 5) gebracht werden kann.

Das Rastelement 18 ist mit dem Armlehnenhalter 4 derart verbunden, daß jede Schwenkbewegung des unteren Tragarms 7 um die erste Schwenkachse 9 eine Linearbewegung des Rastelements 18 induziert (Pfeil 25). Die Ankopplung des Rastelements 18 an die Bewegung des Armlehnenhalters 4 erfolgt dabei über ein mit dem Rastelement 18 verbundene Lenkerelement 26. Dieses Lenkerelement 26 ist mit dem unteren Tragarm 7 derart verbunden, daß ein Feststellen des Rastelements 18 in einer Linearstellung mit Hilfe des Verriegelungselements 19 (siehe Fig. 3 und 4) ein Fixieren des Armlehnenhalters 4 in einer definierten Höhe bewirkt. Läßt sich wegen der Position des Verriegelungselements 19 das Rastelement 18 nicht linear verschieben, dann ist auch keine Höhenverstellung der Armlehne 1 möglich.

Das Rastelement 18 ist über das Lenkerelement 26 mit dem unteren Tragarm 7 des Armlehnenhalters 4 im Bereich des oberen, höhenveränderlichen Endes 27 des Armlehnenhalters 4, nämlich an einem von der zweiten Schwenkachse 10 beabstandeten Lenker-Drehpunkt 28 gelenkig verbunden, beispielsweise mit Hilfe eines Drehzapfens. Dieser Lenker-Drehpunkt 28 wird durch einen aus der länglichen Grundform des unteren Tragarms 7 auskragenden Lenkerarm 29 bereitgestellt. Durch diese exzentrische Anlenkung wird jedes Verschwenken des unteren Tragarms 7 in eine hin- und hergehende Schub- bzw. Zugbewegung 25 des Lenkerelements 26 umgesetzt. Der Lenker-Drehpunkt 28 kann auch an einer andern Stelle des unteren Tragarms 7 oder an dem oberen Tragarm 8 vorgesehen sein. Eine Anordnung nahe der oberen Schwenkachsen 10, 12 der Tragarme 7, 8 ist jedoch vorteilhaft, um die benötige Länge des Lenkerelements 26 und damit den erforderlichen Bauraum zu minimieren. Unter anderem durch die Wahl des Lagewinkels des Lenkerarmes 29 zu der Mittellängsachse 30 des unteren Tragarmes 7 (siehe Fig. 4) und die Wahl der Länge des Lenkerarms 29, genauer gesagt des Abstandes zwischen der zweiten Schwenkachse 10 und dem Lenker-Drehpunkt 28, kann die gewünschte Relation zwischen einer Schwenkbewegung 15 des Armlehnenhalters 4 und einer Linearbewegung 25 des Rastelements 18 beeinflußt werden.

Die Arretiereinrichtung 17 ist somit dem oberen, höhenveränderlichen Ende 27 des Armlehnenhalters 4 zugeordnet. Dabei befinden sich alle wesentlichen Komponenten der Arretiereinrichtung 17 im Inneren 16 des Armlehnengehäuses 5. Auch der an dem unteren Tragarm 7 angebrachte Lenkerarm 29 ragt durch eine geeignete Öffnung 31 in das Armlehnengehäuse 5 hinein (siehe Fig. 5). Der Armlehnenhalter 4 selbst, genauer gesagt die beiden Tragarme 7, 8 des Armlehnenhalters 4, weisen keine weiteren Konstruktionselemente der Arretiereinrichtung 17 auf.

Elemente der Arretiereinrichtung 17 finden sich auch nicht am oder im Armlehnenverbindungsstück 6.

Im Inneren 16 des Armlehnengehäuses 5 greift das Lenkerelement 26 unmittelbar an dem Rastelement 18 an und führt dieses in einer als Zwangsführung ausgebildeten Linearführung hin und her. Hierzu weist das Rastelement 18 an seiner einen Querseite einen Zapfen 34 auf, der in einer Langlochführung 32 im Armlehnengehäuse 5 einliegt, siehe Fig. 2, in der die untere Führungsbahn der Linearführung 32 dargestellt ist. An der gegenüberliegenden Querseite ist das Rastelement 18 mit dem freien Ende des Lenkerelements 26 verbunden. Das Lenkerelement 26 weist gegenüber dem Rastelement 18 einen zusätzlichen rotatorischen Freiheitsgrad auf. Die mit einer Drehbewegung überlagerten hin- und hergehenden Schub- bzw. Zugbewegung des Lenkerelement 26 ist in Fig. 5 mit Pfeil 33 angedeutet; der sich in Abhängigkeit von der Verschwenkung des Armlehnenhalters 4 ändernde Lagewinkel des Lenkerelements 26 ist in den Fig. 3 und 4 erkennbar.

Die Kraftübertragung von dem Lenkerelement 26 auf das Rastelement 18 erfolgt daher beispielsweise dergestalt, daß das Freiende ces Lenkerelements 26 als Mitnehmer 36 ausgeführt ist, der nach Art einer Klinke ein an dieser Querseite des Rastelements 18 seitlich herausragendes Mitnahmeteil 37 umgreift, wobei die Klinke zugleich einen geeigneten Freiraum aufweist, um eine sichere Mitnahme des Mitnahmeteils 37 in jeder Stellung des Lenkerelements 26 zu gewährleisten. Alternativ (nicht abgebildet) erfolgt die Übertragung der Bewegung des Lenkerelements 26 in eine reine Linearbewegung des Rastelements 18 über eine am Freiende des Lenkerelements 26 vorgesehene Bohrung, in der ein anstelle des Mitnahmeteils 37 aus der Querseite des Rastelements 18 herausragender Zapfen eingreift.

Die Linearbewegung des Rastelements 18 erfolgt parallel zu der Armlauflage 2, genauer gesagt parallel zu der Armauflagenlängsrichtung 38, die bei typischer Ausrichtung der Armauflage 2 parallel zu der Stuhllängsrichtung 13 verläuft.

Bei dem Rastelement 18 handelt es sich um ein passives Bauteil. Es wird also lediglich von dem Lenkerelement 26 mitgenommen. Eine initiale Bewegung des Rastelements 18 zum Hervorrufen einer Schwenkbewegung des Armlehnenhalters 4 als Folgebewegung und damit einer Höhenverstellung ist weder vorgesehen noch möglich.

In seiner höhenfixierenden Ruhestellung steht das Verriegelungselement 19 mit dem Rastelement 18 in Eingriff, um das Rastelement 18 in einer bestimmten Linearposition, also einer bestimmten Verfahrposition während seiner Linearbewegung 25 in der Zwangsführung 32, festzustellen. In dieser Ruhestellung (siehe Fig. 3 und 4) greifen die an der Oberseite 39 des Rastelements 18 angeordneten Rasten 40 in entsprechend an der Unterseite 41 des Verriegelungselements 19 angeordnete Rastausnehmungen 42 ein und umgekehrt. Das Verriegelungselement 19 ist quer zu der Richtung der Linearbewegung 25 des Rastelements 18 bewegbar (Pfeil 35) und läßt sich zum Verstellen der Höhe der Armlehne 1 von dieser Ruhestellung in eine Verstellstellung überführen. In dieser Verstellstellung steht das Verriegelungselement 19 außer Eingriff mit dem Rastelement 18. Das Überführen in die Verstellstellung erfolgt durch ein Betätigen des Tasters 22, der bei seiner Betätigung unmittelbar an dem Verriegelungselement 19 angreift und dieses in die Verstellstellung verbringt. Dabei wirkt die Verstellkraft entgegen der Federkraft der Federelemente 23, die das Verriegelungselement 19 in Richtung der Ruhestellung beaufschlagen und bei nicht betätigtem Taster 22 seinen Verbleib in der Ruhestellung sichern bzw. bei einem Loslassen des Tasters 22 das Verriegelungselement 19 wieder zurück in seine Ruhestellung bringen. Als Federelemente 23 sind hier einfache Schraubendruckfedern dargestellt. Anstelle dieser können andere geeignete Federelemente verwendet werden.

Wie in Fig. 2 und 5 erkennbar, ist der an der Unterseite 21 des Armlehnengehäuses 5 angebrachte Taster 22 nach oben in Richtung Armauflagenpolsterung 3 in das Innere 16 des Armlehnengehäuses 5 hineindrückbar (Pfeil 35). Der Taster 22 weist in Armauflagenlängsrichtung 38 gesehen vorn und hinten vorgesehene, zylinderförmige Stempelelemente 43 auf, die an dem über dem Rastelement 18 liegenden Verriegelungselement 19, genauer gesagt an dessen zu beiden Seiten der Rastausnehmungen 42 vorgesehenen Kontaktflächen 44 anliegen. Bei einer Betätigung des Tasters 22 wird das Verriegelungselement 19 entgegen der Federkraft der den Stempelelementen 43 des Tasters 22 gegenüberliegenden Federelementen 23 das Verriegelungselement 19 nach oben in Richtung Armauflage 2 gedrückt, so daß die Rasten 40 außer Eingriff gelangen und das Rastelement 16 frei in seiner Linearführung 32 nach vorne und hinten, hin und her bewegt werden kann. In dieser Verstellstellung ist es möglich, durch ein Verschwenken des Armlehnenhalters 4 die Höhe der Armlehne 1, also den Abstand der Armauflage 2 zu dem Armlehnenverbindungsstück 6, zu verstellen. Durch die Parallelogrammführung bleibt dabei die Armauflage 2 stets in ihrer waagerechten Lage. Ist die gewünschte Höhenposition der Armauflage 2 erreicht, befindet sich also entsprechend der Verschwenkung des Armlehnenhalters 4 das Rastelement 18 in seiner gewünschten Linearposition, wird durch ein Loslassen des Tasters 22 die Höhenverstellung wieder arretiert. Die Federelemente 23, die sich an dem Deckel 45 des Armlehnengehäuses 5 abstützen, gewährleisten die Rückkehr des Verriegelungselements 19 in dessen Ausgangsposition, in der die Rasten 40 und Rastausnehmungen 42 von Verriegelungselement 19 und Rastelement 18 wieder in Eingriff miteinander stehen. Als Gegenlager für die Federelemente 23 kann - in Abhängigkeit von der Bauart der Armauflage 2 - auch die Unterseite 46 der Armauflage 2 selbst dienen, so daß ein das Armlehnengehäuse 5 nach oben in Richtung Armauflagenpolsterung 3 weisender Gehäusedeckel 45 nicht zwingend notwendig ist.

Die Armauflage 2 kann darüber hinaus gegenüber dem Armlehnengehäuse 5 beispielsweise längs- und/oder querverschieblich ausgeführt sein. Die dafür notwendige Mechanik kann ebenfalls im Inneren 16 des Armauflagengehäuses 5 untergebracht sein.

Das beschriebene Ausführungsbeispiel zeigt lediglich eine von mehreren Varianten. So kann beispielsweise die Anordnung der Tragarme 7, 8 von der dargestellten Ausführung abweichen. Anstelle der dargestellten Parallelogrammführung kann auch eine anders ausgeführte Armlehnenhalterung 4 vorgesehen sein, beispielsweise mit in Anzahl und/oder Ausführung veränderten Tragarmen. Anstelle des Tasters 22 kann auch eine andere geeignete Auslösevorrichtung im oder am Armlehnengehäuse 5 vorgesehen sein. In einer bevorzugten Ausführungsform ist das Armlehnengehäuse 5 teilweise oder vollständig in die Armauflage 2 integriert.

### Bezugszeichenliste

- 1: Armlehne
- 2: Armauflage
- 3: Armlehnenpolsterung
- 4: Armlehnenhalter
- 5: Armlehnengehäuse
- 6: Armlehnenverbindungsstück
- 7: unterer Tragarm
- 8: oberer Tragarm
- 9: erste Schwenkachse
- 10: zweite Schwenkachse
- 11: dritte Schwenkachse
- 12: vierte Schwenkachse
- 13: Stuhllängsrichtung
- 14: (frei)
- 15: Richtung der Schwenkbewegung, Schwenkrichtung
- 16: Gehäuseinneres
- 17: Arretiereinrichtung
- 18: Rastelement
- 19: Verriegelungselement
- 20: (frei)
- 21: Gehäuseunterseite
- 22: Taster, Auslösevorrichtung
- 23: Federelement
- 24: (frei)
- 25: Richtung der Linearbewegung, Linearrichtung
- 26: Lenkerelement
- 27: oberes Ende des Tragarmes
- 28: Lenker-Drehpunkt
- 29: Lenkerarm
- 30: Mittellängsachse des Tragarms
- 31: Gehäuseöffnung
- 32: Linearführung, Zwangsführung
- 33: Hin- und Herbewegung des Lenkerelements
- 34: Zapfen
- 35: Bewegungsrichtung des Tasters
- 36: Mitnehmer
- 37: Mitnahmeteil
- 38: Armauflagenlängsrichtung
- 39: Oberseite des Rastelements
- 40: Raste
- 41: Unterseite des Verriegelungselements
- 42: Rastausnehmung
- 43: Stempelelement
- 44: Kontaktfläche
- 45: Gehäusedeckel
- 46: Unterseite der Armauflage

## Patentansprüche

1. Höhenverstellbare Armlehne (1) für einen Stuhl, insbesondere einen Bürostuhl, mit einer Armauflage (2), die von einem Armlehnenhalter (4) gehalten wird, wobei der Armlehnenhalter (4) verschwenkbar ist, durch welches Verschwenken eine Höhenverstellung der Armlehne (1) bewirkt wird, und mit einer Arretiereinrichtung (17) zum Fixieren des Armlehnenhalters (4) in einer Höhenstellung, wobei die Arretiereinrichtung (17) am oberen, höhenveränderlichen Ende (27) des Armlehnenhalters (4) angeordnet ist und ein linear bewegliches Rastelement (18) aufweist, welches Rastelement (18) mit dem Armlehnenhalter (4) über ein Lenkerelement (26) derart verbunden ist, daß jede Schwenkbewegung (15) des Armlehnenhalters (4) eine Linearbewegung (25) des Rastelements (18) induziert, wobei das Lenkerelement (26) unmittelbar an dem Rastelement (18) angreift und dieses in einer Linearführung (32) hin und her führt, wobei die Linearbewegung des Rastelements (18) parallel zu der Längsrichtung (38) der Armlauflage (2) verläuft, **dadurch gekennzeichnet, daß** der Armlehnenhalter (4) wenigstens einen Tragarm (7) umfaßt, welcher einerseits unter Ausbildung einer ersten Schwenkachse (9) an einem Teil (6) des Stuhlgestells und andererseits unter Ausbildung einer zweiten Schwenkachse (10) an der Armauflage (2) angelenkt ist, wobei dieser Tragarm (7) an einem von den Schwenkachsen (9, 10) beabstandeten Drehpunkt (28) gelenkig mit dem Lenkerelement (26) verbunden ist derart, daß ein Verschwenken des Tragarms (7) in eine hin- und hergehende Bewegung (25) des Lenkerelements (26) umgesetzt wird.

2. Höhenverstellbare Armlehne (1) nach Anspruch 1, **dadurch gekennzeichnet, daß** das Rastelement (18) mit dem Armlehnenhalter (4) derart verbunden ist, daß ein Verhindern der Linearbewegung (25) durch ein Feststellen des Rastelements (18) ein Verhindern der Schwenkbewegung (15) und damit ein Fixieren des Armlehnenhalters (4) in einer Höhenstellung bewirkt.

3. Höhenverstellbare Armlehne (1) nach Anspruch 1 oder 2, **dadurch gekennzeichnet, daß** das Lenkerelement (26) mit dem Armlehnenhalter (4) im Bereich des oberen, höhenveränderlichen Endes (27) des Armlehnenhalters (4) verbunden ist.

4. Höhenverstellbare Armlehne (1) nach einem der Ansprüche 1 bis 3, **dadurch gekennzeichnet, daß** der Drehpunkt (28) durch einen Lenkerarm (29) bereitgestellt wird, der aus einer länglichen Grundform des Tragarms (7) auskragt.

5. Höhenverstellbare Armlehne (1) nach Anspruch 4, **dadurch gekennzeichnet, daß** der Drehpunkt (28) nahe der oberen Schwenkachsen (10) angeordnet ist.

6. Höhenverstellbare Armlehne (1) nach einem der Ansprüche 1 bis 5, **dadurch gekennzeichnet, daß** die Arretiereinrichtung (17) ein Verriegelungselement (19) aufweist, welches in seiner höhenfixierenden Ruhestellung mit dem Rastelement (18) in Eingriff steht, und welches zum Verstellen der Höhe der Armlehne (1) durch ein Betätigen einer Auslösevorrichtung (22) von dieser Ruhestellung in eine Verstellstellung verbringbar ist, in welcher es außer Eingriff mit dem Rastelement (18) steht, wobei das Verriegelungselement (19) vorzugsweise quer zu der Richtung (25) der Linearbewegung des Rastelements (18) bewegbar ist.

7. Höhenverstellbare Armlehne (1) nach Anspruch 6, **dadurch gekennzeichnet, daß** wenigstens ein Federelement (23) das Verriegelungselement (19) beaufschlagt und seinen Verbleib in der Ruhestellung sichert.

8. Höhenverstellbare Armlehne (1) nach Anspruch 7, **dadurch gekennzeichnet, daß** die Auslösevorrichtung (22) einen Taster umfaßt, der bei seiner Betätigung an dem Verriegelungselement (19) angreift und dieses entgegen der Federkraft des wenigstens einen Federelements (23) in die Verstellstellung verbringt.

9. Höhenverstellbare Armlehne (1) nach einem der Ansprüche 1 bis 8, **dadurch gekennzeichnet, daß** der Armlehnenhalter (4) derart ausgeführt ist, insbesondere unter Ausbildung einer Parallelogrammführung, daß die Lage der Armlauflage (2) unabhängig von der Höhenstellung unverändert ist.

## Claims

1. Height-adjustable armrest (1) for a chair, in particular an office chair, having an arm support (2), which is held by an armrest holder (4), wherein the armrest holder (4) is pivotable, said pivoting causing the armrest (1) to be adjusted in height, and having an arresting device (17) for fixing the armrest holder (4) in a height position, wherein the arresting device (17) is positioned at the upper, alterable-height end (27) of the armrest holder (4) and has a linearly movable latching element (18), which latching element (18) is connected to the armrest holder (4) via a link element (26) such that each pivoting movement (15) of the armrest holder (4) induces a linear movement (25) of the latching element (18), wherein the link element (26) acts directly on the latching element (18) and guides the latter back and forth in a linear guide (32), wherein the linear movement of the latching element (18) runs parallel to the longitudinal direction (38) of the arm support (2), **characterized in that** the armrest holder (4) comprises at least one supporting arm (7) which is articulated, on the one hand, on a part (6) of the chair frame, a first pivot pin (9) being formed in the process, and, on the other hand, on the arm support (2), a second pivot pin (10) being formed in the process, wherein said supporting arm (7) is connected to the link element (26) in an articulated manner at a point of rotation (28), which is spaced apart from the pivot pins (9, 10), such that pivoting of the supporting arm (7) is converted into a back and forth movement (25) of the link element (26).

2. Height-adjustable armrest (1) according to Claim 1, **characterized in that** the latching element (18) is connected to the armrest holder (4) such that prevention of the linear movement (25) as a result of the latching element (18) being secured causes prevention of the pivoting movement (15) and thus fixing of the armrest holder (4) in a height position.

3. Height-adjustable armrest (1) according to Claim 1 or 2, **characterized in that** the link element (26) is connected to the armrest holder (4) in the region of the upper, alterable-height end (27) of the armrest holder (4).

4. Height-adjustable armrest (1) according to one of Claims 1 to 3, **characterized in that** the point of rotation (28) is provided by a guide arm (29) which projects out of the basic elongated shape of the supporting arm (7).

5. Height-adjustable armrest (1) according to Claim 4, **characterized in that** the point of rotation (28) is positioned near the upper pivot pins (10).

6. Height-adjustable armrest (1) according to one of Claims 1 to 5, **characterized in that** the arresting device (17) has a locking element (19) which, in its height-fixing rest position, is in engagement with the latching element (18) and which, in order for the height of the armrest (1) to be adjusted by actuating of a triggering means (22), can be shifted from said rest position into an adjustment position, in which it is disengaged from the latching element (18), wherein the locking element (19) can be moved preferably transversely to the direction (25) of the linear movement of the latching element (18).

7. Height-adjustable armrest (1) according to Claim 6, **characterized in that** at least one spring element (23) acts on the locking element (19) and ensures that it remains in the rest position.

8. Height-adjustable armrest (1) according to Claim 7, **characterized in that** the triggering means (22) comprises a pushbutton which, when actuated, acts on the locking element (19) and shifts the latter counter to the spring force of the at least one spring element (23), into the adjustment position.

9. Height-adjustable armrest (1) according to one of Claims 1 to 8, **characterized in that** the armrest holder (4) is designed, in particular to form a parallelogram guide, such that the position of the arm support (2), irrespective of the height position, remains unaltered.

## Revendications

1. Accoudoir réglable en hauteur (1) pour un siège, en particulier un siège de bureau, comportant un appuie-bras (2) qui est retenu par un support d'accoudoir (4), le support d'accoudoir (4) étant pivotant, pivotement par le biais duquel un réglage en hauteur de l'accoudoir (1) est produit, et comportant un dispositif de blocage (17) servant à la fixation du support d'accoudoir (4) dans une position en hauteur, le dispositif de blocage (17) étant disposé à l'extrémité (27) supérieure, de hauteur variable, du support d'accoudoir (4) et présentant un élément d'encliquetage (18) mobile linéairement, lequel élément d'encliquetage (18) est relié au support d'accoudoir (4) par le biais d'un élément bielle (26) de telle sorte que chaque mouvement de pivotement (15) du support d'accoudoir (4) induise un mouvement linéaire (25) de l'élément d'encliquetage (18), l'élément bielle (26) agissant directement sur l'élément d'encliquetage (18) et guidant celui-ci suivant un mouvement linéaire (32) en va-et-vient, le mouvement linéaire de l'élément d'encliquetage (18) s'étendant parallèlement à la direction longitudinale (38) de l'appuie-bras (2), **caractérisé en ce que** le support d'accoudoir (4) comprend au moins un bras porteur (7), lequel est articulé à une extrémité sur une partie (6) du cadre de siège en formant un premier axe de pivotement (9) et est articulé à l'autre extrémité sur l'appuie-bras (2) en formant un deuxième axe de pivotement (10), ce bras porteur (7) étant relié de manière articulée à l'élément bielle (26) en un centre de rotation (28) espacé des axes de pivotement (9, 10), de telle sorte qu'un pivotement du bras porteur (7) soit converti en un mouvement (25) de va-et-vient de l'élément bielle (26) .

2. Accoudoir réglable en hauteur (1) selon la revendication 1, **caractérisé en ce que** l'élément d'encliquetage (18) est relié au support d'accoudoir (4) de telle sorte qu'un empêchement du mouvement linéaire (25) par une immobilisation de l'élément d'encliquetage (18) produise un empêchement du mouvement de pivotement (15) et par conséquent une fixation du support d'accoudoir (4) dans une position en hauteur.

3. Accoudoir réglable en hauteur (1) selon la revendication 1 ou 2, **caractérisé en ce que** l'élément bielle (26) est relié au support d'accoudoir (4) dans la région de l'extrémité (27) supérieure, de hauteur variable, du support d'accoudoir (4).

4. Accoudoir réglable en hauteur (1) selon l'une des revendications 1 à 3, **caractérisé en ce que** le centre de rotation (28) est fourni par un bras de bielle (29) qui fait saillie à partir d'une forme de base allongée du bras porteur (7).

5. Accoudoir réglable en hauteur (1) selon la revendication 4, **caractérisé en ce que** le centre de rotation (28) est disposé près des axes de pivotement (10) supérieurs.

6. Accoudoir réglable en hauteur (1) selon l'une des revendications 1 à 5, **caractérisé en ce que** le dispositif de blocage (17) comprend un élément de verrouillage (19), lequel est en prise avec l'élément d'encliquetage (18) dans sa position de repos fixant la hauteur, et lequel peut être amené de cette position de repos à une position de réglage pour le réglage de la hauteur de l'accoudoir (1) par un actionnement d'un dispositif de déclenchement (22), position de réglage dans laquelle il est hors de prise avec l'élément d'encliquetage (18), l'élément de verrouillage (19) étant mobile de préférence transversalement à la direction (25) du mouvement linéaire de l'élément d'encliquetage (18).

7. Accoudoir réglable en hauteur (1) selon la revendication 6, **caractérisé en ce qu'**au moins un élément ressort (23) sollicite l'élément de verrouillage (19) et assure son maintien dans la position de repos.

8. Accoudoir réglable en hauteur (1) selon la revendication 7, **caractérisé en ce que** le dispositif de déclenchement (22) comprend un bouton-poussoir, lequel, lors de son actionnement, agit sur l'élément de verrouillage (19) et amène celui-ci à la position de réglage à l'encontre de la force de ressort de l'au moins un élément ressort (23).

9. Accoudoir réglable en hauteur (1) selon l'une des revendications 1 à 8, **caractérisé en ce que** le support d'accoudoir (4) est réalisé, en particulier en formant un guide à parallélogramme, de telle sorte que la position de l'appuie-bras (2) soit inchangée indépendamment de la position en hauteur.
